# EUROPÄISCHE PATENTSCHRIFT

(11) **EP 3 116 930 B1**
(45) Veröffentlichungstag und Bekanntmachung des Hinweises auf die Patenterteilung: **16.05.2018**
(21) Anmeldenummer: 15707960.9
(22) Anmeldetag: 05.03.2015
(51) Int. Cl.: C08G 18/76, C08G 18/12, C08G 18/28, C08G 18/42, C09J 175/04, C08G 18/78, C08G 18/80

(54) **POLYURETHAN-HEISSSCHMELZKLEBSTOFF MIT NIEDRIGEM GEHALT AN MONOMEREN DIISOCYANATEN UND GUTER VERNETZUNGSGESCHWINDIGKEIT**
POLYURETHANE HOT MELT ADHESIVE WITH A LOW MONOMER DIISOCYANATE CONTENT AND GOOD CURING SPEED
ADHÉSIF THERMOFUSIBLE EN POLYURÉTHANE AVEC UNE FAIBLE TENEUR EN DIISOCYANATES MONOMÈRES ET UNE BONNE VITESSE DE RÉTICULATION

(30) Priorität: 11.03.2014 EP 14158830
(43) Veröffentlichungstag der Anmeldung: 18.01.2017
(73) Patentinhaber: Sika Technology AG, 6340 Baar (CH)
(72) Erfinder: JANKE, Doreen, 25486 Alveslohe (DE); CORDES, Mathias, 22525 Hamburg (DE); PASCHKOWSKI, Kai, 21635 Jork (DE)
(74) Vertreter: Sika Patent Attorneys
(86) Internationale Anmeldenummer: PCT/EP2015/054625
(87) Internationale Veröffentlichungsnummer: WO 2015/135833

(56) Entgegenhaltungen:
- EP-A1- 0 096 249
- EP-A1- 1 801 138
- DE-C1- 10 215 641

## Beschreibung

### Technisches Gebiet

Die Erfindung betrifft das Gebiet der Polyurethan-Heissschmelzklebstoffe.

### Stand der Technik

Reaktive Polyurethan-Zusammensetzungen, die sich als Heissschmelzklebstoffe - auch Hotmelts genannt - einsetzen lassen, sind bekannt (PUR-HM). Sie bestehen meist aus Isocyanat-terminierten Polyurethan-Prepolymeren, die durch Umsetzung geeigneter Polyole mit einem Überschuss an Diisocyanaten erhalten werden. Solche Klebstoffe bauen unmittelbar nach ihrer Applikation durch Abkühlen eine hohe Anfangshaftfestigkeit auf und erhalten ihre Endeigenschaften, insbesondere Wärmestandfestigkeit und Beständigkeit gegenüber Umwelteinflüssen, durch die allmählich ablaufende "Aushärtung", d.h. die chemische Reaktion der Isocyanatgruppen mit Luftfeuchtigkeit.

Bedingt durch die bei der Prepolymerisierungsreaktion entstehende Molmassenverteilung enthalten solche PUR-HM bedeutende Mengen an nicht umgesetzten monomeren Diisocyanaten ("Monomere"), welche bei den bei Heissschmelzklebstoffen üblichen Applikationstemperaturen von 85 bis 200 °C, typischerweise 120 bis 160 °C, ausgasen und als reizende, sensibilisierende oder toxische Stoffe eine Gesundheitsbelastung für den Verarbeiter darstellen können.

In der EU verlangt der Gesetzgeber, dass Produkte als schädlich (Xn) zu kennzeichnen sind, wenn deren Monomergehalt die Grenze von 0,1 Gew.-% überschreitet. Des Weiteren sind diese Produkte ab einer Konzentration von monomeren MDI von >1% mit einem zusätzlich R-Satz zu kennzeichnen: R-40 - Verdacht auf krebserregende Wirkung. Aus diesen Gründen wurden verschiedene Anstrengungen unternommen, den Monomergehalt in reaktiven PUR-HM zu vermindern.

Ein naheliegender Ansatz ist die physikalische Entfernung des Monomers durch Destillation oder Extraktion, beschrieben z.B. in WO 01/14443 A1 und WO 01/40340 A2 (Destillation) sowie US 6133415, DE 19616046 A1 und EP 0337898 A1 (Extraktion). Diese Methoden sind apparativ aufwendig und deshalb teuer; zudem sind sie nicht für alle Monomere gut anwendbar.

Der Einsatz von gestrippten Prepolymeren, z.B. Desmodur®VPLS 2397, ist bekannt. Ein solches PUR-HM zeigt folgende Nachteile: Reduzierung des Wärmestandes und unzureichende Lagerstabilität, sowie geringere Haftung.

Ein anderer Ansatz besteht in der Verwendung von speziellen Diisocyanaten mit unterschiedlich reaktiven Isocyanat-Gruppen, beschrieben z.B. in WO 03/033562 A1, WO 03/006521 A1 und WO 03/055929 A1. Insbesondere wird die Verwendung eines unsymmetrischen MDI-Isomers, 2,4'-Diphenylmethandiisocyanat, beschrieben, mit welchem sich auf einfache Art Prepolymere mit niedrigem Monomergehalt bei tiefer Viskosität erhalten lassen. Nachteilig an diesem Verfahren ist die ungenügende Verfügbarkeit von geeigneten Monomeren im technischen Maßstab, verbunden mit einem hohen Preis. Zusätzlich sind Einbußen bei der Aushärtungsgeschwindigkeit hinzunehmen, da für die Aushärtungsreaktion zur Hauptsache nur noch die Isocyanatgruppen mit der geringeren Reaktivität zur Verfügung stehen.

Schließlich besteht ein Ansatz darin, bei der Prepolymerisierung anstelle der monomeren Diisocyanate Addukte oder Oligomere davon einzusetzen, um die Flüchtigkeit zu vermindern, beschrieben z.B. in WO 01/40342 A1 und DE 4429679 A1. Hier ergeben sich Nachteile bei der Viskosität und der Reaktivität der so hergestellten Produkte.

Der Einsatz von latenten Härtern ist in WO 2007/036575 A1 beschrieben. Durch diese Technologie ist es möglich kennzeichnungsfreie und lagerungsstabile PUR-HM zu formulieren. Bei diesem Ansatz ergeben sich Nachteile im Emissionsverhalten (VDA 278). Die so formulierten Produkte können aufgrund hoher Emissionen im VOC und FOG nicht für Automobilanwendungen eingesetzt werden, da die Emission der Klebstoffe die Grenzwerte bei weitem überschreitet.

Der Einsatz von Silanen, z.B. Mercaptosilanen, ist bekannt. Durch diese Technologie ist es möglich R-40-freie oder kennzeichnungsfreie PUR-HM zu formulieren. Bei diesem Ansatz ergeben sich Nachteile im Emissionsverhalten (VDA 277) durch das Methanol, welches bei der Aushärtereaktion als Kondensationsprodukt abgespaltet wird. Ein weiterer Nachteil ist, dass die Silanchemie im Vergleich zur NCO-Wasser Aushärtereaktion weitaus langsamer bei niedrigen Temperaturen und Luftfeuchtigkeiten abläuft. Dieses führt bei der Anwendung im Automobilbau zu großen Nachteilen, da solche Klebstoffverbunde nach einer relativ kurzen Aushärtezeit Klimawechseltests bestehen müssen.

Eine als Heissschmelzklebstoff einsetzbare reaktive Polyurethan-Zusammensetzung (PUR-HM), die auf Isocyanat-terminierten Prepolymeren beruht, welche in einem einfachen Verfahren ausgehend von Polyolen und technisch verfügbaren monomeren Diisocyanaten erhalten werden, und die einen niedrigen Gehalt an eben diesen Monomeren aufweist, lagerstabil und gut verarbeitbar ist und über niedrigere Emissionen im Vergleich zu oben genanntem Ansatz verfügt, sowie eine gute Durchhärtegeschwindigkeit bei niedrigen Temperaturen und Luftfeuchtigkeiten aufweist, ist bisher nicht bekannt.

EP 1801138 A1 betrifft einen feuchtigkeitshärtenden Heissschmelzklebstoff umfassend ein silanfunktionelles Polyurethanprepolymer, welches durch Umsetzung eines Isocyanat-funktionellen Polyurethanprepolymers mit einem Mercaptosilan erhalten wird.

DE 10215641 C1 beschreibt die Herstellung einer als Schmelzkleber geeigneten Polyurethan-Zusammensetzung mit einem geringen Anteil an Diisocyanatmonomeren, die durch Umsetzung eines Isocyanat-reaktiven Polymers mit einem monomeren Diisocyanat und anschließender Zugabe eines isocyanatterminierten Prepolymers mit einem Gehalt von höchstens 0,1 Gew.-% monomerem Diisocyanat erhalten wird.

### Darstellung der Erfindung

Aufgabe der vorliegenden Erfindung ist es daher, feuchtigkeitshärtende Heissschmelzklebstoffe zur Verfügung zu stellen, die die vorstehend genannten Nachteile nach dem Stand der Technik überwindet. Insbesondere sollte ein Heissschmelzklebstoff auf Basis einer reaktiven Polyurethan-Zusammensetzung (PUR-HM) bereitgestellt werden, bei dem das Isocyanatterminierte Prepolymer in einem einfachen Verfahren ausgehend von Polyolen und technisch verfügbaren monomeren Diisocyanaten erhalten werden kann und der Heissschmelzklebstoff trotzdem einen niedrigen Gehalt an monomeren Diisocyanaten aufweist, lagerstabil und gut verarbeitbar ist und über niedrigere Emissionen verfügt, sowie eine gute Durchhärtegeschwindigkeit bei niedrigen Temperaturen und Luftfeuchtigkeiten aufweist.

Überraschenderweise wurde gefunden, dass die Aufgabe mit einem feuchtigkeitshärtenden Heissschmelzklebstoff nach Anspruch 1 bzw. dem Verfahren zur Herstellung des feuchtigkeitshärtenden Heissschmelzklebstoffs nach Anspruch 12 gelöst werden kann.

Das Verfahren zur Herstellung der erfindungsgemäßen Heissschmelzklebstoffe ist gegenüber den aus dem Stand der Technik beschriebenen Verfahren äußerst einfach, preiswert und in einem normalen Batch-Reaktor durchführbar. Der Monomergehalt des Heisschmelzklebstoffs wird durch die Modifikationsreaktion mit dem Mercaptosilan drastisch erniedrigt, da das Mercaptosilan bevorzugt mit dem monomeren Diisocyanat reagiert. Eine Reaktion des Mercaptosilans mit dem Prepolymer ist allerdings auch möglich. Der so erhaltene Klebstoff weist im Vergleich zu der unmodifizierten Variante eine etwas schlechtere Lagerungsstabilität in der Wärme sowie eine etwas schlechtere Verarbeitungsstabilität auf offenen Applikationsanlagen auf.

Durch Einsatz einer relativ geringen Menge an Mercaptosilan wird die Vernetzungsgeschwindigkeit nur mäßig verringert. Andererseits verringert der Einsatz des Mercaptosilans und das als Komponente d) eingesetzte Prepolymer den Monomergehalt deutlich. Dies bringt den Vorteil, dass die Systeme mit weniger Mercaptosilan umgesetzt werden müssen, was sich positiv auf die Geschwindigkeit der Vernetzungsreaktion und auf die Gesamtemission bei der Silanhärtung auswirkt, bei der Methanol als Kondensationsprodukt gebildet wird. Der Wärmestand wird nur geringfügig verringert.

Der Vorteil des erfindungsgemäßen Heisschmelzklebstoffs besteht insbesondere darin, den Monomergehalt durch Einsatz von Mercaptosilan und durch Zugabe von Prepolymer mit niedrigem Monomergehalt den Gehalt an monomeren Polyisocyanat wie MDI drastisch zu senken, so dass R40-freie PUR-HM mit einem Monomergehalt unter 1% formuliert werden können, und gleichzeitig eine gute Stabilität der so formulierten Klebstoffe in der Wärme (Lagerungsstabilität) und auf offenen Applikationsgeräten (Verarbeitungsstabilität), reduzierte Emissionen im Vergleich zu herkömmlichem silanmodifiziertem PUR-HM und ausreichend gute Vernetzungsgeschwindigkeit sowie gute Beständigkeit des ausgehärteten Klebstoffes in der Wärme erreicht werden können.

Weitere Aspekte der Erfindung sind ein Verfahren zur Verklebung mit dem Heissschmelzklebstoff sowie ein durch dieses Verfahren erhaltener Artikel und die Verwendung des Heissschmelzklebstoffs. Weitere Ausführungsformen sind Gegenstand der abhängigen Ansprüche.

### Wege zur Ausführung der Erfindung

Die Vorsilbe "Poly" in Substanzbezeichnungen wie "Polyol" oder "Polyisocyanat" bezieht sich auf Substanzen, die formal zwei oder mehr der in ihrer Bezeichnung vorkommenden funktionellen Gruppe pro Molekül enthalten. Ein Polyol ist z.B. eine Verbindung mit zwei oder mehr Hydroxylgruppen und ein Polyisocyanat ist eine Verbindung mit zwei oder mehr Isocyanatgruppen.

Ein Monomer ist ein Molekül mit mindestens einer polymerisationsfähigen Gruppe. Ein monomeres Di- oder Polyisocyanat enthält insbesondere keine Urethangruppe. Das monomere Diisocyanat oder Polyisocyanat weist insbesondere ein Molekulargewicht von nicht mehr als 1000 g/mol, bevorzugt nicht mehr als 500 g/mol und bevorzugter nicht mehr als 400 g/mol auf.

Ein Prepolymer ist ein Polymer, das mindestens eine, gewöhnlich zwei oder mehr reaktionsfähige Gruppen, z.B. Isocyanatgruppen, enthält. Über die reaktionsfähigen Gruppen kann das Prepolymer kettenverlängert, vernetzt oder gehärtet werden.

Unter dem mittleren Molekulargewicht wird hier das Zahlenmittel des Molekulargewichts verstanden, welches bestimmt wird durch GPC-Analyse (Gelpermeations-Chromatographie).

Die Viskosität wurde mittels Rheomat (Brookfield, Thermosel, Spindel 27, Scherrate 1 min⁻¹) gemessen.

Gegenstand der Erfindung ist ein feuchtigkeitshärtender Heissschmelzklebstoff, der erhältlich ist durch ein Verfahren umfassend
A) das Umsetzen von einem oder mehreren Polyolen als Komponente a) mit einem oder mehreren monomeren Polyisocyanaten, bevorzugt Diisocyanaten, als Komponente b), wobei das stöchiometrische Verhältnis von Isocyanatgruppen zu Hydroxylgruppen größer 1 ist, um ein Umsetzungsprodukt enthaltend ein Isocyanat-funktionelles Polyurethan-Prepolymer zu erhalten,
B) die Zugabe von mindestens einem Mercaptosilan der Formel (I) als Komponente c)

   HS-R³-Si(X)₍₃₋ₐ₎(R²)ₐ (I)

   worin R² eine lineare oder verzweigte Alkylgruppe mit 1 bis 10 C-Atomen ist, R³ eine lineare oder verzweigte Alkylengruppe mit 1 bis 10 C-Atomen ist, X ein hydrolysierbarer Rest ist und a für einen Wert von 0, 1 oder 2, bevorzugt 0, steht;
   zum Umsetzungsprodukt und Umsetzung, um ein mit dem Mercaptosilan modifiziertes Umsetzungsprodukt zu erhalten, und
C) die Zugabe eines Isocyanat-funktionellen Polyurethan-Prepolymers, das einen Gehalt an monomerem Polyisocyanat von unter 1 Gew.-% aufweist, als Komponente d) vor, während und/oder nach der Zugabe des Mercaptosilans zum Umsetzungsprodukt oder modifizierten Umsetzungsprodukt,
wobei das mindestens eine Mercaptosilan in einer Menge von 0,5 bis 3,5 Gew.-% und das Isocyanat-funktionelle Polyurethan-Prepolymer als Komponente d) in einer Menge von 10% bis 50 Gew.-%, jeweils bezogen auf das Gesamtgewicht der Komponenten a) bis d), zugegeben wird.

Gegenstand der Erfindung ist ferner ein Verfahren zur Herstellung des feuchtigkeitshärtenden Heissschmelzklebstoffs.

Der erfindungsgemäße feuchtigkeitshärtende Heissschmelzklebstoff ist erhältlich durch ein Verfahren, bei dem im ersten Schritt A) ein oder mehrere Polyole als Komponente a) mit einem oder mehreren monomeren Polyisocyanaten, bevorzugt monomeren Diisocyanaten, als Komponente b) umgesetzt, wobei das stöchiometrische Verhältnis von Isocyanatgruppen zu Hydroxylgruppen größer 1 ist, um ein Umsetzungsprodukt enthaltend ein Isocyanat-funktionelles Polyurethan-Prepolymer zu erhalten. Es handelt sich hierbei um das allgemein übliche, dem Fachmann bekannte Verfahren zur Herstellung von Isocyanat-funktionellen Polyurethanen.

### Komponente a)

Es können ein oder mehrere Polyole eingesetzt werden. Als Polyole sind ein oder mehrere Polyetherpolyole, ein oder mehrere Polyesterpolyole, ein oder mehrere Polycarbonatpolyole und Mischungen davon bevorzugt, wobei Polyesterpolyole besonders bevorzugt sind. Bei den Polyolen handelt es sich z.B. um Diole oder Triole oder Mischungen davon. Besonders bevorzugt sind ein oder mehrere Diole, insbesondere ein oder mehrere Polyetherdiole, ein oder mehrere Polyesterdiole, ein oder mehrere Polycarbonatdiole und Mischungen davon.

Als Polyole besonders bevorzugt sind ein oder mehrere Polyesterpolyole, z.B. Polyestertriole und insbesondere Polyesterdiole. Geeignete Polyesterpolyole sind bei 25°C flüssige, amorphe, teilkristalline oder kristalline Polyesterpolyole, wie Polyestertriole und insbesondere Polyesterdiole, und Mischungen dieser Polyesterpolyole. Unter flüssigen Polyolen, z.B. Polyesterpolyolen, werden hier Polyole, z.B. Polyesterpolyole, verstanden, die bei einer Temperatur von 25°C flüssig sind. Bei den flüssigen Polyesterpolyolen handelt es sich bevorzugt um Polyesterpolyole, die bei einer Temperatur zwischen 0 bis 25°C fest werden.

Bevorzugt wird als Polyol eine Kombination von einem flüssigen Polyesterpolyol, wie einem Polyestertriol oder bevorzugt einem Polyesterdiol, mit mindestens einem amorphen, teilkristallinen oder kristallinen Polyesterpolyol, wie einem Polyestertriol oder insbesondere einem Polyesterdiol, eingesetzt.

Besonders geeignet als Polyole sind ein oder mehrere flüssige Polyesterdiole und Mischungen von einem oder mehreren flüssigen Polyesterdiolen mit einem oder mehreren amorphen, teilkristallinen oder kristallinen Polyesterdiolen, wobei eine Mischung von einem oder mehreren amorphen Polyesterdiolen mit einem oder mehreren flüssigen Polyesterdiolen besonders bevorzugt ist.

Die Polyesterpolyole, z.B. Polyestertriole und insbesondere Polyesterdiole, weisen bevorzugt ein mittleres Molekulargewicht von 1000 bis 15'000 g/mol, insbesondere von 1500 bis 8000 g/mol, bevorzugt von 1700 bis 5500 g/mol, auf.

Bevorzugt als Polyole sind auch ein oder mehrere amorphe Polycarbonatdiole sowie Mischungen von Polyesterdiolen und Polycarbonatdiolen.

Als Polyetherpolyole, auch Polyoxyalkylenpolyole genannt, sind insbesondere jene geeignet, welche Polymerisationsprodukte von Ethylenoxid, 1,2-Propylenoxid, 1,2- oder 2,3-Butylenoxid, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie z.B. 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt z.B. mit Hilfe von sogenannten Double Metal Cyanide Complex Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten.

Besonders geeignete Polyetherpolyole sind Polyoxyalkylendiole oder Polyoxyalkylentriole, insbesondere Polyoxyethylendiole oder Polyoxyethylentriole.

Speziell geeignet sind Polyoxyalkylendiole oder Polyoxyalkylentriole, insbesondere Polyoxypropylendiole und -triole mit einem mittleren Molekulargewicht im Bereich von 1000 bis 30'000 g/mol, sowie Polyoxypropylendiole und -triole mit einem mittleren Molekulargewicht von 400 bis 8'000 g/mol. Beispielsweise werden derartige Polyetherpolyole unter dem Handelsnamen Acclaim® von Bayer vertrieben.

Ebenfalls besonders geeignet sind sogenannte "EO-endcapped" (ethylene oxide-endcapped) Polyoxypropylendiole oder -triole. Letztere sind spezielle Polyoxypropylenpolyoxyethylenpolyole, die z.B. dadurch erhalten werden, dass reine Polyoxypropylenpolyole nach Abschluss der Polypropoxylierung mit Ethylenoxid alkoxyliert werden und dadurch primäre Hydroxylgruppen aufweisen.

Als Polyesterpolyole, bevorzugt Polyestertriole und insbesondere Polyesterdiole, sind insbesondere jene geeignet, welche hergestellt sind aus zwei- bis dreiwertigen, bevorzugt zweiwertigen, Alkoholen, wie beispielsweise 1,2-Ethandiol, Diethylenglykol, Triethylenglykol, 1,2-Propandiol, 1,3-Propandiol, Dipropylenglykol, 1,4-Butandiol, 1,5-Pentandiol, 1,6-Hexandiol, 1,8-Octandiol, 1,10-Decandiol, 1,12-Dodecandiol, Dimerfettalkohol, Neopentylglykol, Glycerin, 1,1,1-Trimethylolpropan oder Mischungen der vorgenannten Alkohole, mit organischen Dicarbonsäuren oder Tricarbonsäuren, bevorzugt Dicarbonsäuren, oder deren Anhydriden oder Estern, wie z.B. Bernsteinsäure, Glutarsäure, 3,3-Dimethylglutarsäure, Adipinsäure, Korksäure, Sebacinsäure, Undecandisäure, Dodecandicarbonsäure, Azelainsäure, Maleinsäure, Fumarsäure, Phthalsäure, Dimerfettsäure, Isophthalsäure, Terephthalsäure und Hexahydrophthalsäure oder Mischungen der vorgenannten Säuren, sowie Polyesterpolyole aus Lactonen wie beispielsweise aus ε-Caprolacton, auch Polycaprolactone genannt.

Besonders geeignete Polyesterpolyole sind Polyesterpolyole aus Adipinsäure, Sebacinsäure oder Dodecandicarbonsäure als Dicarbonsäure und aus Hexandiol oder Neopentylglycol als zweiwertigen Alkohol.

Weitere Beispiele für geeignete Polyesterpolyole sind Polyesterpolyole oleochemischer Herkunft. Derartige Polyesterpolyole können z.B. durch vollständige Ringöffnung von epoxidierten Triglyceriden eines wenigstens teilweise olefinisch ungesättigte Fettsäure enthaltenden Fettgemisches mit einem oder mehreren Alkoholen mit 1 bis 12 C-Atomen und anschliessender partieller Umesterung der Triglycerid-Derivate zu Alkylesterpolyolen mit 1 bis 12 C-Atomen im Alkylrest hergestellt werden.

Besonders geeignete kristalline oder teilkristalline Polyesterpolyole sind Adipinsäure/Hexandiol-Polyester und Dodecandicarbonsäure/Hexandiol-Polyester.

Als Polycarbonatpolyole geeignet sind jene, wie sie durch Umsetzung beispielsweise der oben genannten - zum Aufbau der Polyesterpolyole eingesetzten - zwei- oder dreiwertigen Alkohole mit Dialkylcarbonaten, Diarylcarbonaten oder Phosgen zugänglich sind. Besonders geeignet sind Polycarbonatdiole, insbesondere amorphe Polycarbonatdiole.

Weitere geeignete Polyole sind Rizinusöl und dessen Derivate oder hydroxyfunktionelle Polybutadiene, die z. B. unter dem Handelsnamen "Polybd" erhältlich sind.

Der Anteil des mindestens einen Polyols als Komponente a) kann z.B. in einem Bereich von 40 bis 90 Gew.-%, bevorzugt 50 bis 85 Gew.-%, bevorzugter 60 bis 80 Gew.-%, bezogen auf das Gesamtgewicht der Komponenten a) bis d), liegen.

### Komponente b)

Als monomere Polyisocyanate für die Herstellung des Umsetzungsprodukts können aliphatische, cycloaliphatische oder aromatische Polyisocyanate, insbesondere Diisocyanate, verwendet werden. Es können die üblichen, im Handel erhältlichen monomeren Polyisocyanate bzw. Diisocyanate verwendet werden.

Beispiele für monomere Polyisocyanate, bevorzugt monomere Diisocyanate, sind 1,6-Hexamethylendiisocyanat (HDI), 2-Methylpentamethy-len-1,5-diisocyanat, 2,2,4- und 2,4,4-Trimethyl-1,6-hexamethylendiisocyanat (TMDI) und Gemische dieser Isomeren, 1,10-Decamethylendiisocyanat, 1,12-Dodecamethylendiisocyanat, Lysin- und Lysinesterdiisocyanat, Cyclohexan-1,3- und -1,4-diisocyanat und Gemische dieser Isomeren, 1-Methyl-2,4- und - 2,6-diisocyanatocyclohexan und Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI) und Gemische dieser Isomeren, 1,4- Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI) und Gemische dieser Isomeren, m- und p- Tetramethyl-1,3- und -1,4-xylylendiisocyanat (m- und p-TMXDI) und Gemische dieser Isomeren, Bis-(1-isocyanato-1-methylethyl)-naphthalin, 2,4- und 2,6-Toluylendiisocyanat und Gemische dieser Isomeren (TDI), 4,4'-, 2,4'- und 2,2'-Diphenylmethandiisocyanat und Gemische dieser Isomeren (MDI), 1,3- und 1,4-Phenylendiisocyanat und Gemische dieser Isomeren, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), sowie Mischungen der vorgenannten Isocyanate. Für das Formulieren von lichtstabilen Zusammensetzungen werden bevorzugt aliphatische und cycloaliphatische Polyisocyanate eingesetzt.

Bevorzugt sind MDI, TDI, HDI und IPDI. Besonders bevorzugt sind MDI, insbesondere 4,4'-Diphenylmethandiisocyanat (4,4'-MDI), und IPDI.

Das monomere Polyisocyanat, bevorzugt das monomere Diisocyanat, weist vorzugsweise ein Molekulargewicht von nicht mehr als 500 g/mol, bevorzugter nicht mehr als 400 g/mol auf.

### Umsetzungsprodukt

Das eine oder die mehreren Polyole und das eine oder die mehreren monomeren Polyisocyanate, bevorzugt Diisocyanate, werden in einem solchen Verhältnis umgesetzt, dass das stöchiometrische Verhältnis von Isocyanatgruppen zu Hydroxylgruppen größer 1 ist. Das stöchiometrische Verhältnis zwischen Isocyanat- und Hydroxylgruppen ist bevorzugt im Bereich von 1,3 bis 2,5, besonders bevorzugt von 1,5 bis 2,2.

Die Umsetzung zur Herstellung des Isocyanat-funktionellen Polyurethan-Prepolymers erfolgt in bekannter Weise direkt aus den Polyisocyanaten und den Polyolen oder durch schrittweise Adduktionsverfahren, die auch als Kettenverlängerungsreaktionen bekannt sind.

Die Umsetzung des mindestens einen Polyols mit dem mindestens einen monomeren Polyisocyanat, bevorzugt monomeren Diisocyanat, kann z.B. bei Temperaturen im Bereich von 60 bis 160 °C, bevorzugt von 80 bis 140 °C, durchgeführt werden. Die Dauer der Umsetzung hängt naturgemäß von der eingesetzten Temperatur ab, kann aber z.B. 30 min bis 3 h, bevorzugt von 1 bis 1,5 h, betragen.

Aus der Umsetzung wird ein Umsetzungsprodukt enthaltend ein Isocyanat-funktionelles Polyurethan-Prepolymer erhalten. Es ist bevorzugt, dass das Umsetzungsprodukt mehr als 90 Gew.-%, bevorzugter mehr als 95 Gew.-% Isocyanat-funktionelles Polyurethan-Prepolymer, bezogen auf das Gesamtgewicht des Umsetzungsprodukts, enthält. In dem Umsetzungsprodukt ist ferner insbesondere nicht umgesetztes monomeres Polyisocyanat, insbesondere monomeres Diisocyanat, enthalten. Das Umsetzungsprodukt weist in der Regel einen Gehalt an nicht umgesetztem monomerem Polyisocyanat von mehr als 1 Gew.- %, z.B. 1,5 bis 5 Gew.-%, insbesondere etwa 2 bis 4 Gew.-%, bezogen auf das Gesamtgewicht des Umsetzungsprodukts, auf.

Es ist weiter vorteilhaft, wenn das Isocyanat-funktionelle Polyurethan-Prepolymer bei 20°C fest ist. Es kann dabei kristallin, teilkristallin oder amorph sein. Für ein teilkristallines oder amorphes Isocyanat-funktionelles Polyurethan-Prepolymer gilt dabei, dass es bei 20°C nicht oder nur wenig fliessfähig ist, das heisst, dass es bevorzugt bei 20 °C eine Viskosität von mehr als 5000 Pa·s aufweist.

Weiter ist es bevorzugt, wenn das Isocyanat-funktionelle Polyurethan-Prepolymer ein mittleres Molekulargewicht von über 1000 g/mol, insbesondere von 1200 bis 50'000 g/mol, bevorzugt von 2000 bis 30'000 g/mol, aufweist.

Weiterhin weist das Isocyanat-funktionelle Polyurethan-Prepolymer bevorzugt eine mittlere Isocyanat-Funktionalität im Bereich von 1,8 bis 2,2 auf.

Es ist dem Fachmann klar, dass die eingesetzten Polyole und Polyisocyanate üblicherweise Mischungen mit unterschiedlichen Funktionalitäten darstellen. Beispielsweise enthält ein technisches Diol häufig neben dem Diol auch noch Monole als Nebenprodukt, so dass die mittlere Funktionalität nicht 2 sondern weniger als 2 beträgt. Andererseits können technische Diole auch Zusätze von Triolen enthalten, so dass die mittlere Funktionalität nicht 2 sondern mehr als 2 beträgt.

In Schritt B) wird zu dem erhaltenen Umsetzungsprodukt ein Mercaptosilan zugesetzt und damit umgesetzt, um ein mit dem Mercaptosilan modifiziertes Umsetzungsprodukt zu erhalten. Es können ein oder mehrere Mercaptosilane der Formel (I) eingesetzt werden.

### Komponente c)

Das zugesetzte Mercaptosilan ist ein Mercaptosilan der Formel (I)

HS-R³-Si(X)₍₃₋ₐ₎(R²)ₐ (I)

worin R² eine lineare oder verzweigte Alkylgruppe mit 1 bis 10 C-Atomen ist, R³ eine lineare oder verzweigte Alkylengruppe mit 1 bis 10 C-Atomen ist, X ein hydrolysierbarer Rest ist und a für einen Wert von 0, 1 oder 2, bevorzugt 0, steht.

In der Formel (I) ist R² eine lineare oder verzweigte Alkylgruppe mit 1 bis 10 C-Atomen, bevorzugt eine lineare oder verzweigte Alkylgruppe mit 1 bis 4 C-Atomen, z.B. Methyl oder Ethyl. Wie bereits angegeben ist a bevorzugt 0, wobei in diesem Fall kein Substituent R² vorhanden ist und das Mercaptosilan drei hydrolysierbare Gruppen X aufweist.

In der Formel (I) ist R³ eine lineare oder verzweigte Alkylengruppe mit 1 bis 10 C-Atomen, bevorzugt eine lineare oder verzweigte Alkylengruppe mit 1 bis 6 C-Atomen, z.B. Methylen, Ethylen, Propylen, 2-Methylpropylen und 3,3-Dimethylbutylen. R³ ist besonders bevorzugt Methylen oder Propylen.

Die hydrolysierbaren Reste X können gleich oder verschieden sein. Solche hydrolysierbaren Reste sind in der Silanchemie gut bekannt. Hydrolysierbare Reste sind Gruppen an einem Siliciumatom, die durch Wasser, gegebenenfalls in Anwesenheit von Katalysatoren, hydrolysiert werden können. Bei der Hydrolysereaktion wird die hydrolysierbare Gruppe vom Siliciumatom verdrängt und formal durch eine Hydroxylgruppe ersetzt (Si-X + H₂O → Si-OH + HX). Die bei der Hydrolyse gebildeten Silanolgruppen sind reaktiv und kondensieren in der Regel spontan unter Bildung von Siloxanbrücken.

Die hydrolysierbaren Reste X im Mercaptosilan der Formel (I) können die in der Silikonchemie üblichen sein. Beispiele für geeignete hydrolysierbare Reste X haben die nachstehenden Formeln (X-1), (X-2), (X-3), (X-4), (X-5), (X-6), (X-7) und (X-8), wobei die gestrichelte Linie jeweils die Bindung zum Si-Atom symbolisiert. 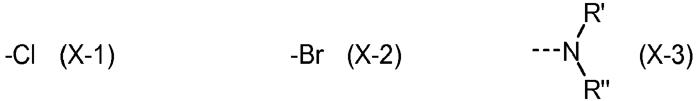 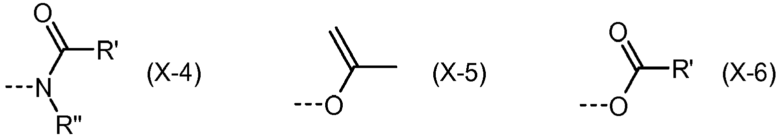 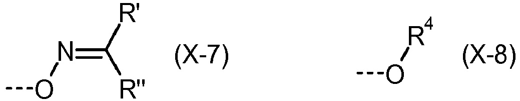 wobei R' und R" unabhängig voneinander für Alkyl oder Aryl stehen und R⁴ für eine lineare oder verzweigte Alkylgruppe mit 1 bis 10 C-Atomen, welche gegebenenfalls 1 oder 2 Ether-Sauerstoffe enthält, insbesondere für eine lineare oder verzweigte Alkylgruppe mit 1 bis 4 C-Atomen, insbesondere Methyl, Ethyl oder Isopropyl, steht.

In einer speziellen Ausführung können zwei Alkoxygruppen -OR⁴ zusammen für eine Alkylendioxy-Gruppe -OR⁵O- stehen, welche mit dem Siliciumatom einen fünf- oder sechsgliedrigen Ring bilden, wobei R⁵ für eine Alkylengruppe mit 2 bis 10, insbesondere 2 oder 3, C-Atomen steht.

Besonders bevorzugt ist der hydrolysierbare Rest X eine Alkoxygruppe -OR⁴, insbesondere Methoxy, Ethoxy oder Isopropoxy, wobei Methoxy besonders bevorzugt ist.

Geeignete Mercaptosilane der Formel (I) sind z.B. Mercaptomethyl-trimethoxysilan, Mercaptomethyl-triethoxysilan, Mercaptomethyl-dimethoxymethylsilan, Mercaptomethyl-diethoxymethylsilan, 3-Mercaptopropyl-trimethoxysilan, 3-Mercaptopropyl-triethoxysilan, 3-Mercaptopropyl-triisopropoxysilan, 3-Mercaptopropyl-methoxy(1,2-ethylendioxy)-silan, 3-Mercaptopropyl-methoxy(1,2-propylendioxy)-silan, 3-Mercaptopropyl-ethoxy(1,2-propylendioxy)-silan, 3-Mercaptopropyl-dimethoxymethylsilan, 3-Mercaptopropyl-diethoxymethylsilan, 3-Mercapto-2-methylpropyl-trimethoxysilan und 4-Mercapto-3,3-dimethylbutyl-trimethoxysilan.

Als Mercaptosilane der Formel (I) sind 3-Mercaptopropyl-trimethoxysilan, 3-Mercaptopropyl-triethoxysilan, Mercaptomethyltrimethoxysilan und Mercaptomethyltriethoxysilan bevorzugt, wobei 3-Mercaptopropyl-trimethoxysilan und Mercaptomethyltrimethoxysilan besonders bevorzugt sind.

Das mindestens eine Mercaptosilan der Formel (I) wird in einem Anteil von 0,5 bis 3,5 Gew.-%, bevorzugt 1 bis 3,3 Gew.-%, bevorzugter 1,3 bis 3 Gew.-% und besonders bevorzugt von 1,6 bis 2,8 Gew.-%, bezogen auf das Gesamtgewicht der Komponenten a) bis d), zugegeben.

Es ist ferner bevorzugt, dass das mindestens eine Mercaptosilan der Formel (I) in einem Anteil von weniger als 3 Gew.-%, bevorzugt nicht mehr als 2,8 Gew.-% und bevorzugter nicht mehr als 2,5 Gew.-%, bezogen auf das Gesamtgewicht der Komponenten a) und b), zugegeben wird. Es ist ferner bevorzugt, dass das mindestens eine Mercaptosilan der Formel (I) in einem Anteil von mindestens 1 Gew.-%, bevorzugter mindestens 1,8 Gew.-% und besonders bevorzugt mindestens 2 Gew.-%, bezogen auf das Gesamtgewicht der Komponenten a) und b), zugegeben wird.

### Modifiziertes Umsetzungsprodukt

Die Reaktion des Mercaptosilans der Formel (I) mit dem Umsetzungsprodukt erfolgt in bekannter Weise, wodurch ein modifiziertes Umsetzungsprodukt erhalten wird. Insbesondere reagiert dabei die Thiolgruppe des Mercaptosilans mit den Isocyanatgruppen, die in Verbindungen des Umsetzungsprodukts enthalten sind, insbesondere mit den Isocyanatgruppen des nicht umgesetzten monomeren Polyisocyanats, insbesondere Diisocyanats, des gebildeten Isocyanat-funktionellen Polyurethan-Prepolymers und gegebenenfalls des zugegebenen monomerarmen Isocyanat-funktionellen Polyurethan-Prepolymers (Komponente d). Wie nachstehend erläutert kann die Komponente d) auch vor oder gleichzeitig mit dem Mercaptosilan zum Umsetzungsprodukt zugegeben werden.

Bei der Reaktion der Thiolgruppen des Mercaptosilans mit den im Umsetzungsprodukt enthaltenen Isocyanatgruppen handelt es sich um eine allgemein bekannte Additionsreaktion, bei der Thiourethan- bzw. Thiolourethan-Gruppen gebildet werden. Ohne sich an eine Theorie binden zu wollen, wird davon ausgegangen, dass das Mercaptosilan bevorzugt mit den reaktiveren monomeren Polyisocyanaten, insbesondere Diisocyanaten, reagiert, wodurch der Monomeranteil im Umsetzungsprodukt reduziert wird. Eine Reaktion des Mercaptosilans mit den im Umsetzungsprodukt enthaltenen Isocyanat-funktionellen Prepolymeren ist aber ebenfalls möglich.

Die Umsetzung des Mercaptosilans mit dem Umsetzungsprodukt, das gegebenenfalls bereits die Komponente d) umfasst, zur Bildung des modifizierten Umsetzungsprodukts erfolgt bevorzugt bei einer erhöhten Temperatur, z.B. bei einer Temperatur von mindestens 60 °C, bevorzugt mindestens 100 °C, bevorzugter mindestens 110 °C oder mindestens 140 °C. Die Dauer der Umsetzung hängt naturgemäß von der eingesetzten Temperatur ab, kann aber z.B. 0,5 bis 2 h, bevorzugt von 45 min bis 1,5 h, betragen.

Gegebenenfalls kann ein Katalysator für die Umsetzung mit dem Mercaptosilan zugegeben werden. Beispiele für geeignete Katalysatoren sind Titanate, Organozinnverbindungen, Bismutverbindungen, z.B. mit organischen Liganden und/oder Komplexliganden, und aminogruppenhaltige Verbindungen.

In einem weiteren Schritt (Schritt C)) wird ein Isocyanat-funktionelles Polyurethan-Prepolymer, das einen Gehalt an monomerem Polyisocyanat von unter 1 Gew.-% aufweist, als Komponente d) vor, während und/oder nach der Zugabe des Mercaptosilans zum Umsetzungsprodukt oder modifizierten Umsetzungsprodukt zugegeben. Es können hierfür ein oder mehrere derartige monomerarme Isocyanat-funktionelle Polyurethan-Prepolymere eingesetzt werden.

### Komponente d)

Das als Komponente d) eingesetzte Isocyanat-funktionelle Polyurethan-Prepolymer weist einen Gehalt an monomerem Polyisocyanat von unter 1 Gew.-%, bevorzugt nicht mehr als 0,5 Gew.-%, bevorzugter nicht mehr als 0,15 Gew.-%, auf und wird im Folgenden auch als monomerarmes Polyurethan-Prepolymer bezeichnet. Es kann auch im wesentlichen frei von monomerem Polyisocyanaten sein.

Das monomerarme Polyurethan-Prepolymer wird wie üblich aus der Umsetzung von einem oder mehreren Polyolen und einem oder mehreren monomeren Polyisocyanaten hergestellt. Wie vorstehend diskutiert enthalten die nach üblichen Verfahren hergestellten Isocyanat-funktionellen Polyurethan-Prepolymere einen Restgehalt an nicht umgesetztem monomerem Polyisocyanat, der in der Regel mehr als 1 Gew.-% des Produkts ausmacht. Das monomere Polyisocyanat, das ein Edukt für das monomerarme Polyurethan-Prepolymer ist und in einem Restgehalt enthalten sein kann, weist insbesondere ein Molekulargewicht von nicht mehr als 1000 g/mol, bevorzugt von nicht mehr als 500 g/mol und besonders bevorzugt nicht mehr als 400 g/mol auf.

Wie bei der Diskussion des Standes der Technik erörtert, sind Verfahren bekannt, um monomerarme Polyurethan-Prepolymere herzustellen, worauf hiermit Bezug genommen wird. Es wird insbesondere auf den Einsatz spezieller Diisocyanate mit unterschiedlich reaktiven Isocyanat-Gruppen, wie z.B. WO 03/033562 A1, WO 03/006521 A1 und WO 03/055929 A1; der Einsatz von Addukten oder Oligomeren der monomeren Polyisocyanate, wie z.B. in WO 01/40342 A1 und DE 4429679 A1 beschrieben, und die Nachbehandlung der in üblicher Weise hergestellten Isocyanat-funktionellen Polyurethan-Prepolymere durch Destillation oder Extraktion zur Verringerung des Restgehalts an monomeren Polyisocyanaten im Produkt, wie z.B. in WO 01/14443 A1, WO 01/40340 A2, US 6133415, DE 19616046 A1 oder EP 0337898 A1 beschrieben.

Die nach diesen Verfahren erhältlichen monomerarmen Polyurethan-Prepolymere können im erfindungsgemäßen Verfahren eingesetzt werden. Solche monomerarmen Polyurethan-Prepolymere sind auch im Handel erhältlich.

Die Polyole und Polyisocyanate, die zur Herstellung der monomerarmen Polyurethan-Prepolymere verwendet werden können, können die gleichen sein, die vorstehend als Komponente a) und Komponente b) erläutert wurden, einschließlich der dort genannten bevorzugten Ausführungsformen, mit der Maßgabe, dass bei den vorstehenden genannten Methoden unter Einsatz spezieller Polyisocyanate die Auswahl diesbezüglich beschränkt ist.

Bevorzugt sind monomerarme Polyurethan-Prepolymere, bei denen der Monomergehalt durch Extraktion oder insbesondere Destillation reduziert worden ist. Die Destillation kann z.B. durch Strippen über einen Dünnschichtverdampfer erfolgen.

Besonders bevorzugt ist als monomerarmes Polyurethan-Prepolymer als Komponente d) ein Umsetzungsprodukt von mindestens einem Polyol und mindestens einem monomeren Polyisocyanat, wobei restliches monomeres Polyisocyanat durch Destillation oder Extraktion auf einen Restgehalt von unter 1 Gew.-%, bevorzugt nicht mehr 0,5 Gew.-%, bevorzugter nicht mehr als 0,15 Gew.-%, im Umsetzungsprodukt entfernt worden ist.

Das monomerarme Polyurethan-Prepolymer basiert bevorzugt aus einem Umsetzungsprodukt von mindestens einem Polyol und mindestens einem monomeren Polyisocyanat, insbesondere monomeren Diisocyanat, wobei das Polyol ein Polyetherpolyol, insbesondere ein Polypropylenglykol, oder ein flüssiger Polyesterpolyol ist und/oder das monomere Diisocyanat vorzugsweise MDI, TDI, HDI und IPDI, besonders bevorzugt 4,4'-MDI und IPDI ist, bei dem anschließend monomeres Diisocyanat durch Extraktion oder insbesondere Destillation reduziert oder weitgehend entfernt wurde.

Besonders bevorzugt wird ein monomerarmes Polyurethan-Prepolymer eingesetzt, dass durch Umsetzung von einem Polyetherpolyol, wie Polypropylenetherglycol, und MDI und anschließendem Entfernen von nicht umgesetztem MDI erhalten wird. Ein solches Produkt ist im Handel als Desmodur®VP LS 2397 von Bayer Material Science erhältlich. Desmodur®VP LS 2397 weist einen MDI-Monomergehalt von nicht mehr als 0,15 Gew.-% und ein mittleres Molekulargewicht von 1100-1500 g/mol auf.

Das Isocyanat-funktionelle Polyurethan-Prepolymer als Komponente d) kann vor, während und/oder nach der Zugabe des Mercaptosilans zum Umsetzungsprodukt oder zum modifizierten Umsetzungsprodukt gegeben werden. Die Reihenfolge ist beliebig. In der Regel kann es zweckmäßig sein, die Komponente d) zum Umsetzungsprodukt zuzugeben, bevor das Mercaptosilan zugemischt und umgesetzt wird. Es ist aber genauso möglich, die Komponente d) während und/oder nach der Umsetzung des Umsetzungsprodukts mit dem Mercaptosilan zum modifizierten Umsetzungsprodukt zuzumischen.

Das Isocyanat-funktionelle Polyurethan-Prepolymer als Komponente d) wird vorzugsweise bei einer erhöhten Temperatur zum Umsetzungsprodukt oder zum modifizierten Umsetzungsprodukt gegeben, um eine homogene Mischung zu erhalten, z.B. bei einer Temperatur von mindestens 60°C, bevorzugt mindestens 100 °C und bevorzugter mindestens 110 °C.

Das Isocyanat-funktionelle Polyurethan-Prepolymer als Komponente d) wird in einem Anteil von 10 bis 50 Gew.-%, bevorzugt von 10 bis 45 Gew.-%, bevorzugter von 10 bis 30 Gew.-% und besonders bevorzugt von 10 bis 20 Gew.-%, bezogen auf das Gesamtgewicht der Komponenten a) bis d) zugegeben.

### Optionale Komponenten

Dem feuchtigkeitshärtenden Heissschmelzkleber können gegebenenfalls weitere Hilfsstoffe zugegeben werden, die für solche Heissschmelzkleber üblich sind. Die Hilfsstoffe können zu jedem beliebigen Zeitpunkt zum Umsetzungsprodukt und/oder modifizierten Umsetzungsprodukt zugegeben werden. In der Regel ist es zweckmäßig, den oder die optionalen Hilfsstoffe bei einer erhöhten Temperatur zuzugeben, um eine homogene Mischung zu erhalten, z.B. bei einer Temperatur von mindestens 60°C, bevorzugt mindestens 100°C und bevorzugter mindestens 110 °C.

Es ist bevorzugt, dass optionale Hilfsstoffe, sofern überhaupt eingesetzt, nicht mehr als 60 Gew.-%, bevorzugt nicht mehr als 50 Gew.-%, bezogen auf das Gesamtgewicht des feuchtigkeitshärtenden Heissschmelzklebstoffs ausmachen.

Beispiele für geeignete optionale Hilfsstoffe sind ein oder mehrere thermoplastische Polymere und/oder ein oder mehrere Additive, insbesondere ausgewählt aus Füllstoffen, Katalysatoren, Weichmachern, Haftvermittlern, UV-Absorptionsmitteln, UV- und Wärmestabilisatoren, Antioxidantien, Flammschutzmitteln, optischen Aufhellern, Pigmenten, Farbstoffen und Trocknungsmitteln.

Bei den optionalen thermoplastischen Polymeren handelt es sich bevorzugt um nicht reaktive thermoplastische Polymere. Beispiele sind Homo- oder Copolymere von ungesättigten Monomeren, insbesondere aus der Gruppe umfassend Ethylen, Propylen, Butylen, Isobutylen, Isopren, Vinylacetat bzw. höhere Ester davon und (Meth)acrylat. Besonders geeignet sind Ethylenvinylacetat-Copolymer (EVA), ataktisches Poly-α-Olefin (APAO), Polypropylen (PP) und Polyethylen (PE).

Als Katalysatoren sind insbesondere solche, welche die Hydrolyse und/oder Vernetzung von Silangruppen katalysieren, geeignet. Solche Katalysatoren umfassen z.B. Titanate, Organozinnverbindungen wie Dibutylzinndilaurat und Dibutylzinndiacetylacetonat, Bismut-organische Verbindungen oder Bismut-Komplexe, aminogruppenhaltige Verbindungen, z.B. 1,4-Diaza-bicyclo[2.2.2]octan oder 2,2'-Dimorpholinodiethylether. Beispiele für weitere Katalysatoren sind Katalysatoren, die die Reaktion von Isocyanatgruppen katalysieren.

### Feuchtigkeitshärtender Heissschmelzklebstoff

Der feuchtigkeitshärtende Heissschmelzklebstoff weist vorzugsweise einen Gehalt an monomeren Polyisocyanaten von nicht mehr als 1,0 Gew.-%, bevorzugter nicht mehr als 0,9 Gew.-% und besonders bevorzugt nicht mehr als 0,8 Gew.-%, bezogen auf das Gesamtgewicht des Heissschmelzklebstoffs, auf.

Der feuchtigkeitshärtende Heissschmelzklebstoff der Erfindung ist aufschmelzbar, das heisst, er weist bei der Applikationstemperatur eine genügend niedrige Viskosität auf, so das eine geeignete Applikation möglich ist, und er wird beim Erkalten schnell fest, so dass er schnell Kräfte aufnehmen kann, bereits bevor die Vernetzungsreaktion mit Luftfeuchtigkeit abgeschlossen ist.

Es hat sich gezeigt, dass der feuchtigkeitshärtende Heissschmelzklebstoff bei einer Temperatur von 150°C eine Viskosität von weniger als 100'000 mPas, insbesondere von weniger als 50'000 mPas, aufweisen kann, und bei 70°C insbesondere eine Viskosität von mehr als 20'000 mPas, insbesondere von mehr als 50'000 mPas, aufweisen kann.

Der erfindungsgemäße feuchtigkeitshärtende Heissschmelzklebstoff zeichnet sich dadurch aus, dass er einen niedrigen Gehalt an monomeren Poly- bzw. Diisocyanaten ("Monomere"), wie z.B. MDI, aufweist und dadurch eine höhere Verarbeitungssicherheit besitzt, wodurch Arbeiter vor schädlichen Diisocyanat-Dämpfen geschützt werden. Der niedrige Monomergehalt ermöglicht die Formulierung von R-40 freien (Verdacht auf krebserregende Wirkung) PUR-HM, d.h. solche mit einem Monomergehalt von unter 1,0 Gew.-%. Gleichzeitig weist die Zusammensetzung eine gute Vernetzungsdiche und Durchhärtegeschwindigkeit auf. Der erfindungsgemäße Heissschmelzklebstoff ist außerdem gut zu verarbeiten.

Der erfindungsgemäße feuchtigkeitshärtende Heissschmelzklebstoff eignet sich insbesondere als R-40 - klassifizierungsfreier sowie lagerungs- und verarbeitungsstabiler PUR-HM. Der erfindungsgemäße feuchtigkeitshärtende Heissschmelzklebstoff eignet sich insbesondere für industrielle Anwendungen, z.B. im Fahrzeugbau, insbesondere im Automobilbau, in der Textil- oder Möbelindustrie und in der Verpackungsmittel-Industrie, z.B. als Textilklebstoff und als Folienklebstoff.

Die Erfindung umfasst auch das Verfahren zur Herstellung des feuchtigkeitshärtenden Heissschmelzklebstoffs wie vorstehend beschrieben.

Weiterhin umfasst die Erfindung ein Verfahren zum Verkleben von einem Substrat **S1** mit einem Substrat **S2** umfassend die Schritte
i) Aufheizen eines erfindungsgemäßen feuchtigkeitshärtenden Heissschmelzklebstoffs auf eine Temperatur zwischen 80°C und 200°C, insbesondere zwischen 120°C und 160°C;
ii) Applikation des aufgeheizten feuchtigkeitshärtenden Heissschmelzklebstoffs auf ein Substrat **S1;**
iii) Kontaktieren des applizierten feuchtigkeitshärtenden Heissschmelzklebstoffs mit einem zweiten Substrat **S2;** und
iv) chemisches Aushärten des feuchtigkeitshärtenden Heissschmelzklebstoffs mit Wasser, insbesondere Luftfeuchtigkeit,
wobei das Substrat **S2** aus demselben oder unterschiedlichem Material wie das Substrat **S1** besteht.

Der Fachmann versteht, dass je nach verwendetem System, Temperatur und Reaktivität des Klebstoffs Vernetzungsreaktionen, und damit das chemische Aushärten, bereits während der Applikation beginnen kann. Der Hauptteil der Vernetzung und damit das chemische Aushärten im engeren Sinn findet jedoch gewöhnlich nach der Applikation statt.

Die Substrate **S1** und/oder **S2** können bei Bedarf vor dem Applizieren des Heissschmelzklebstoffs vorbehandelt werden. Derartige Vorbehandlungen umfassen insbesondere physikalische und/oder chemische Reinigungs- und Aktivierungsverfahren, beispielsweise Schleifen, Sandstrahlen, Bürsten, Coronabehandlung, Plasmabehandlung, Beflammen, Anätzen oder dergleichen, oder Behandeln mit Reinigern oder Lösemitteln oder das Aufbringen eines Haftvermittlers, einer Haftvermittlerlösung oder eines Primers.

Die Substrate **S1** und **S2** können eine Vielzahl von Materialien darstellen. Insbesondere eignen sich Kunststoffe, organische Materialien wie Leder, Stoffe, Papier, Holz, mit Harz gebundene Holzwerkstoffe, Harz-Texil-Kompositwerkstoffe, Glas, Porzellan, Keramik sowie Metalle und Metall-Legierungen, insbesondere lackierte oder pulverbeschichtete Metalle und Metall-Legierungen.

Als Kunststoffe eignen sich insbesondere Polyvinylchlorid (PVC), Acrylonitril-Butadien-Styrol-Copolymere (ABS), SMC (Sheet Molding Composites), Polycarbonat (PC), Polyamid (PA), Polyester (PE), Polyoxymethylen (POM), Polyolefine (PO), insbesondere Polyethylen (PE) oder Polypropylen (PP), bevorzugt mit Plasma, Corona oder Flammen oberflächenbehandeltes PP oder PE.

Bevorzugt ist mindestens eines der Substrate **S1** oder **S2** eine Kunststofffolie, eine Textilie oder Glas. Bevorzugte Materialien für die Substrate **S1** und/oder **S2** sind transparente Materialien, insbesondere transparente Kunststofffolien. Ein anderes bevorzugtes transparentes Material ist Glas, insbesondere in Form einer Scheibe.

Der feuchtigkeitshärtende Heissschmelzklebstoff wird insbesondere in einem industriellen Fertigungsprozess eingesetzt. Insbesondere eignet sich der feuchtigkeitshärtende Heissschmelzklebstoff für Verklebungen, in welchen die Verklebungsstelle sichtbar ist. So eignet er sich insbesondere für die Verklebung von Glas, insbesondere im Fahrzeug- und Fensterbau, und für das Verkleben von Klarsichtverpackungen.

Typische Dicken von Verklebungen sind 10 Mikrometer oder mehr. Bevorzugt liegt die Verklebungsdicke im Bereich von 10 Mikrometer bis 1000 Mikrometer, vor allem von 80 Mikrometer bis 500 Mikrometer.

Die Erfindung betrifft auch Artikel, die nach dem erfindungsgemäßen Verklebungsverfahren verklebt werden. Derartige Artikel sind insbesondere Artikel der Transportmittelindustrie, insbesondere der Automobilindustrie, Möbel- oder Textilindustrie.

Beispiele für verklebte Artikel sind Automobil-Innenausstattungsteile, wie Dachhimmel, Sonnenblende, Instrumententafel, Türseitenteil, Hutablage und dergleichen; Holzfaserwerkstoffe aus dem Dusch- und Badbereich; Möbel-Dekorfolien, Membranfolien mit Textilien wie Baumwolle, Polyesterfolien im Bekleidungsbereich oder Textilien mit Schäumen für Autoausstattungen.

Weitere Beispiele für verklebte Artikel sind Artikel aus der Verpackungsbranche, insbesondere eine Klarsichtverpackung.

### Beispiele

Es folgen Beispiele zur weiteren Erläuterung der Erfindung, die aber den Gegenstand der Erfindung in keiner Weise beschränken sollen.

Soweit nicht anders angegeben, beziehen sich Mengenangaben auf das Gewicht. In den Beispielen wurden folgende Substanzen verwendet.

| | | |
|---|---|---|
| Durez Ter S1151-22 | flüssiges Polyesterpolyol | Sumitomo Bakelite Durez Division |
| Dynacoll®7250 | flüssiges Polyesterpolyol | Evonik |
| Desmodur®VP LS 2397 | NCO-funktionelles Polyurethan auf Basis von Polypropylenetherglycol und MDI, MDI-Monomergehalt ≤ 0,15 Gew.-%, Mn 1100-1500 g/mol | Bayer Material Science |
| Silquest®A-189 | Mercaptopropyltrimethoxysilan | Momentive Performance Material |
| MDI | 4,4'-Diphenylmethandiisocyanat (MDI) | |

### Messmethoden

Zur Charakterisierung der hergestellten feuchtigkeitshärtenden Heissschmelzkleber wurden folgende Messmethoden eingesetzt.

### Restmonomer

Der Gehalt an im Heissschmelzkleber verbliebenen, nicht umgesetzten monomeren Polyisocyanaten wurde bestimmt mittels HPLC (Detektion über Photodiodenarray) und ist angegeben in Gew.-% bezogen auf den gesamten untersuchten Heisschmelzklebstoff.

### Durchhärtung

Die Durchhärtegeschwindigkeit des untersuchten Heisschmelzklebstoffs wurde an einem 500 µm Klebstofffilm getestet. Hierzu wurde der Klebstoff für 30 min auf 140°C vorgewärmt. Ein Sicol-Papier (B700 weiß, Breite ca. 6 cm, Länge ca. 60 cm Laufenberg & Sohn KG) und eine Rakel wurde auf einer Heizplatte von 150°C vorgewärmt. 20 g des vorgewärmten Klebstoffs werden in die Rakel gegeben und ein 500 µm Klebstofffilm mit einer Länge von etwa 60 cm auf dem auf der Heizplatte befindlichen Sicol-Papier appliziert. Dann wird das Papier von der Platte genommen. Wenn der Klebstoff erstarrt ist (Startpunkt), wird der Film in einer Klimakammer (23°C, 55% rel. Feuchtigkeit) gelagert. In bestimmten Zeitintervallen wird ein schmaler Streifen von 10 cm x 1 cm von dem Film herausgeschnitten und auf eine Heizplatte von 150°C gelegt. Dies wird solange wiederholt, bis der Streifen auf der Heizplatte nicht mehr aufschmilzt, was anzeigt, dass der Klebstoff durchgehärtet ist. Das Zeitintervall vom Startpunkt bis zu dem Zeitintervall, bei dem der entnommene Streifen nicht aufschmilzt, ist die Dauer (in Stunden) für die Durchhärtung.

### Wärmestand

Als Prüfkörper für diese Messung werden zwei Holzprüfkörper (100mm x 25mm x 5mm) verwendet. Die zu verklebende Fläche beträgt 25mm x 25mm, die Klebstoffdicke ist 1mm, was durch einen 1mm starken Abstandshalter gewährleistet wird.

Der Klebstoff wird in einer verschlossenen Tube für 20 min bei 140°C im Wärmeschrank aufgeschmolzen. Der Klebstoff wird dann auf eine Seite des ersten Holzprüfkörpers aufgetragen; durch leichten Druck wird er auf den zweiten Prüfkörper gepresst, die Verklebung wird mit einem 500g Gewicht fixiert. Gemessen wird der Wärmestand nach vollständiger Aushärtung (ca. 1 Woche) in einer Wärmekammer beginnend bei 40°C. Der Prüfling wird in der Wärmekammer aufgehängt, wobei am unteren Prüfkörper ein Gewicht von 500 g befestigt wird. Die Temperatur wird pro Stunde um 10K erhöht. Es wird die letzte Temperatur notiert, bei der die Verklebung noch nicht versagt hat.

### Wärmestand nach Segeltuchmethode

Zur Bestimmung des Wärmestandes bei 80°C werden zwei Segeltücher jeweils mit einer Fläche von 150 x 50 mm überlappend mit einer Klebfläche von 100 x 50 mm verbunden. Zur Verarbeitung des Klebstoffes schmilzt dieser für 30 Minuten bei 140°C in einer Heizkammer auf. Ein Streifen Sicol-Papier (B700 weiß, Breite ca. 6 cm, Länge ca. 50cm Laufenberg & Sohn KG) und ein Rakel werden auf einer Heizplatte von 150°C vorgewärmt und getrocknet. Von dem geschmolzenen Klebstoff werden etwa 20 g in das Rakel gegeben und ein 100 µm Klebstofffilm mit einer Länge von 50 cm auf dem auf der Heizplatte befindlichen Sicol-Papier aufgezogen. Anschließend wird im Transferverfahren der Klebstofffilm von dem Sicol-Papier auf das Segeltuch übertragen mit einer Klebfläche von 100 x 50 mm und einer Dicke von 0,1 mm. Eventuell muss der getrocknete Klebstofffilm auf dem Sicol-Papier auf der Heizplatte reaktiviert werden damit dieser auf das Segeltuch transferiert werden kann. Das Segeltuch, auf dem sich der Klebstoff befindet, wird überlappend auf ein zweites Segeltuch gelegt. Der Klebstoff im Segeltuchverbund wird nun auf einer Heizplatte von 150°C reaktiviert und mit einer 5 kg Anpressrolle werden die beiden Segeltücher verklebt. Der Segeltuchverbund wird 7 Tage bei 23°C und 55% relativer Luftfeuchte gelagert damit der Klebstoff härtet. Für den Test werden insgesamt 3 entsprechende Prüfkörper vorbereitet.

Die 3 Prüfkörper werden dann in einer Heizkammer von 80°C aufgehängt. Die nicht verklebte Stelle 50 x 50 mm des einen Segeltuches wird an einem Haken gehängt und an die nicht verklebte Stelle des anderen Segeltuches wird ein Gewicht von 500 g gehängt. Die Prüfkörper verweilen für 30 Minuten bei 80°C in der Heizkammer. Nach Ablauf der Zeit werden die Prüfkörper aus der Heizkammer genommen und der eventuelle Ablauf der verklebten Segeltuchfläche gemessen und notiert. Der Wärmestand am Segeltuch ist dann erreicht, wenn die verklebte Segeltuchfläche keinen Ablauf zeigt (in Ordnung, "i.O."). Wenn ein vollständiger oder sehr großer Ablauf (>8 cm) festgestellt wird, weist die Verklebung keinen ausreichenden Wärmestand auf (nicht in Ordnung, "n.i.O.").

### Zugfestigkeit und Bruchdehnung

In Anlehnung an DIN 53504 wurden aus einem 500 µm dicken ausgehärteten Film (Härtung 7 Tage bei 23°C/50% RH) der Probe fünf 2,5 x 10 cm grosse, rechteckige Prüflinge geschnitten. Diese wurden in die Zugprüfmaschine eingespannt (Zwick Z 020) und mit einer Geschwindigkeit von 100 mm/min auseinander gezogen (Prüfbedingung 23°C/50% RH). Gemessen wurde die von der Probe maximal aufgenommene Zugkraft. Daraus wurden Zugfestigkeit und Bruchdehnung bestimmt, wobei aus den fünf Prüflingen jeweils der Mittelwert bestimmt wurde.

Es wurden feuchtigkeitshärtende Heissschmelzklebstoffe hergestellt. In der Tabelle 1 sind die eingesetzten Anteile der Komponenten für die jeweiligen Beispiele in Gew.-% sowie die mit den obigen Messmethoden bestimmten Eigenschaften der in den Beispielen hergestellten Heissschmelzklebstoffe angegeben.

### Beispiel 1 (Vergleich)

Es wurde eine Polyester-Mischung von Durez Ter S1151-22 und Dynacoll® 7250 in den in Tabelle 1 angegebenen Mengen in einem 1 Liter-Reaktionsgefäss mit Antihaftbeschichtung und einem 4-Hals-Planschliffdeckel vorgelegt. Dieses wurde in einem Ölbad mit Temperatursteuerung bei 120°C für 4 Stunden aufgeschmolzen.

Das so erhaltene flüssige Polyolgemisch wurde eine Stunde lang bei gehaltener Temperatur unter Rühren im Hochvakuum entwässert.

Darauf wurde MDI im Molverhältnis NCO/OH = 2:1 zum Polyol in das Reaktionsgefäss zugegeben und 1 Stunde unter Rühren bei gehaltener Temperatur umgesetzt. Das gebildete Reaktionsprodukt wurde bei Raumtemperatur unter Ausschluss von Feuchtigkeit aufbewahrt.

### Beispiel 2 (Vergleich)

Das in Beispiel 1 beschriebene Vorgehen der Herstellung des Prepolymers wurde mit den in Tabelle 1 angegebenen Komponenten und Mengen bei Beispiel 2 identisch durchgeführt, wobei anstelle von MDI Desmodur VP LS 2397 eingesetzt wurde. Das gebildete Reaktionsprodukt wurde bei Raumtemperatur unter Ausschluss von Feuchtigkeit aufbewahrt.

### Beispiel 2b (Vergleich)

Es wurde ein Prepolymer mit den in Tabelle 1 angegebenen Mengen wie in Beispiel 1 beschrieben hergestellt und die in Tabelle 1 aufgeführte Menge Desmodur VP LS 2397 wurde bei einer Temperatur von 120°C für 30 Minuten homogen vermischt. Das gebildete Reaktionsprodukt wurde bei Raumtemperatur unter Ausschluss von Feuchtigkeit aufbewahrt.

### Beispiele 3 und 3b (Vergleich)

Es wurde ein Prepolymer mit den in Tabelle 1 angegebenen Mengen wie in Beispiel 1 beschrieben hergestellt und die in Tabelle 1 aufgeführten Mengen Silquest®A-189 wurden bei einer Temperatur von 120°C für 1 Stunde homogen vermischt. Das gebildete Reaktionsprodukt wurde bei Raumtemperatur unter Ausschluss von Feuchtigkeit aufbewahrt.

### Beispiele 4 bis 8 (Beispiele 5 und 8 sind Vergleichsbeispiele)

Es wurde ein Prepolymer mit den in Tabelle 1 angegebenen Mengen wie in Beispiel 1 beschrieben hergestellt und die in Tabelle 1 aufgeführten Mengen Desmodur VP LS 2397 wurden bei einer Temperatur von 120°C für 30 Minuten homogen vermischt.

Danach wurde die in Tabelle 1 aufgeführte Menge Silquest®A-189 für 1 Stunde bei gehaltener Temperatur homogen vermischt. Das gebildete Reaktionsprodukt wurde bei Raumtemperatur unter Ausschluss von Feuchtigkeit aufbewahrt.

**Tabelle 1* (Mengenangaben in Gew.-%)**

| **Beispiel** | 1 | 2 | 2b | 3 | 3b | 4 | 5 | 6 | 7 | 8 |
|---|---|---|---|---|---|---|---|---|---|---|
| **Rezeptur** | | | | | | | | | | |
| Durez Ter S1151-22 | 52,1% | 32,6% | 45,6% | 51,3% | 52% | 44,6% | 43,7% | 45% | 28,1% | 48,3% |
| Dynacoll 7250 | 34,7% | 21,7% | 30,4% | 34,2% | 34,7% | 29,7% | 29% | 30% | 18,8% | 32,2% |
| Desmodur VP LS 2397 | - | 45,7% | 14% | - | - | 14% | 13,7% | 14,1% | 45% | 7% |
| Silquest A-189 | - | - | - | 3,3% | 1,9% | 1,9% | 4% | 1% | 1,9% | 1,9% |
| MDI | 13,2% | - | 10% | 11,2% | 11,4% | 9,8% | 9,6% | 9,9% | 6,2% | 10,6% |
| **Messergebnisse** | | | | | | | | | | |
| Restmonomer | 2,3% | < 0,1% | 1,1% | 0,57% | 1,1% | 0,46% | 0,49% | 0,80% | 0,46% | 0,88% |
| Durchhärtung 55% rel. Luftf. [Stunden] | 19 | 33 | 21 | 42 | 35 | 32 | 51 | 22 | 32 | 22 |
| Wärmestand | >200°C | 140°C | 130°C | 90°C | 160°C | 160°C | 90°C | 140°C | 140°C | 130°C |
| Wärmestand nach Segeltuchmethode, 7 d, 80°C | i.O. | i.O. | i.O. | n.i.O. | n.i.O. | i.O. | n.i.O. | i.O. | i.O. | n.i.O. |
| Zugfestigkeit [MPa] | 11,2 | 5,8 | 8,2 | 7,6 | 10,5 | 9,1 | 9,5 | 7,9 | 8,7 | 8,3 |
| Bruchdehnung [%] | 405 | 467 | 400 | 378 | 444 | 370 | 331 | 357 | 330 | 386 |

| | | | | | | | | | | |
|---|---|---|---|---|---|---|---|---|---|---|
| * Die Beispiele 4, 6 und 7 sind erfindungsgemäße Beispiele, alle anderen sind Vergleichsbeispiele | | | | | | | | | | |

### Lagerstabilität

Die Klebstoffe der Beispiele 1, 2, 3 und 4 wurden auf ihre Lagerstabilität untersucht. Damit wird die Lagerstabilität im Applikationsequipment unter typischen Verarbeitungsbedingungen, d.h. erhöhter Temperatur, geprüft. Hierfür wurden die Zusammensetzungen bei 140°C gelagert und in bestimmten Zeitintervallen die Viskosität bestimmt. Die Viskositätsmessung wurde kontinuierlich bei 140°C durchgeführt.

Zur Messung der Lagerstabilität (Viskositätsstabilität) wurden die Viskosität η [mPas] der jeweiligen Zusammensetzung mittels Rheomat (Brookfield, Thermosel, Spindel 27, Scherrate 1 min⁻¹) nach einer Lagerzeit t bei 140°C gemessen. Der prozentuale Viskositätsanstieg im Verlauf der Lagerung wurde bezogen auf die Viskosität nach 30 min Lagerung ermittelt.

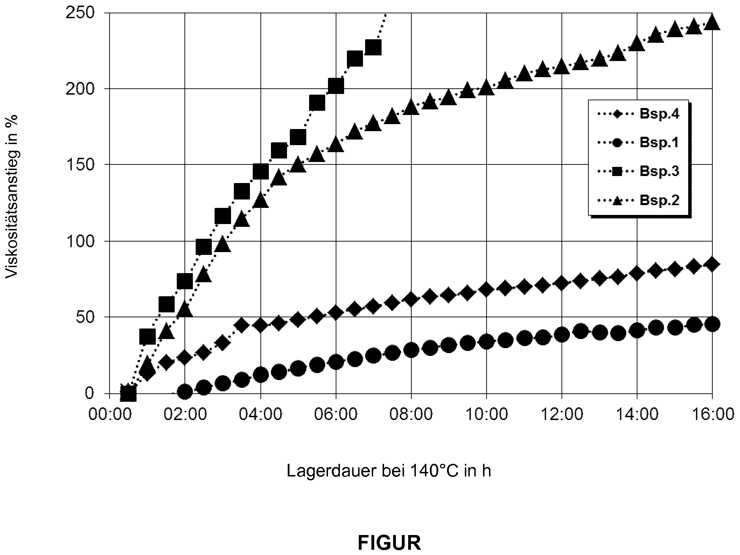

Aus den ermittelten Werten der Viskosität bei den jeweiligen Lagerzeiten wurde der prozentuale Viskositätsanstieg im Zeitverlauf ermittelt, der in der Figur graphisch dargestellt ist. Man sieht deutlich, dass die Beispiele 2 und 3 eine verhältnismäßig schlechte Thermostabilität aufweisen, während das monomerreiche Beispiel 1 und das erfinderische monomerarme Beispiel 4 eine gute Thermostabilität zeigen.

## Patentansprüche

1. Feuchtigkeitshärtender Heissschmelzklebstoff, erhältlich durch ein Verfahren umfassend
A) das Umsetzen von einem oder mehreren Polyolen als Komponente a) mit einem oder mehreren monomeren Polyisocyanaten, bevorzugt Diisocyanaten, als Komponente b), wobei das stöchiometrische Verhältnis von Isocyanatgruppen zu Hydroxylgruppen größer 1 ist, um ein Umsetzungsprodukt enthaltend ein Isocyanat-funktionelles Polyurethan-Prepolymer zu erhalten,
B) die Zugabe von mindestens einem Mercaptosilan der Formel (I) als Komponente c)
HS-R³-Si(X)₍₃₋ₐ₎(R²)ₐ (I)
worin R² eine lineare oder verzweigte Alkylgruppe mit 1 bis 10 C-Atomen ist, R³ eine lineare oder verzweigte Alkylengruppe mit 1 bis 10 C-Atomen ist, X ein hydrolysierbarer Rest ist und a für einen Wert von 0, 1 oder 2, bevorzugt 0, steht;
zum Umsetzungsprodukt und Umsetzung, um ein mit dem Mercaptosilan modifiziertes Umsetzungsprodukt zu erhalten, und
C) die Zugabe eines Isocyanat-funktionellen Polyurethan-Prepolymers, das einen Gehalt an monomerem Polyisocyanat von unter 1 Gew.-% aufweist, als Komponente d) vor, während und/oder nach der Zugabe des Mercaptosilans zum Umsetzungsprodukt oder modifizierten Umsetzungsprodukt,
wobei das mindestens eine Mercaptosilan in einer Menge von 0,5 bis 3,5 Gew.-% und das Isocyanat-funktionelle Polyurethan-Prepolymer als Komponente d) in einer Menge von 10 bis 50 Gew.-%, jeweils bezogen auf das Gesamtgewicht der Komponenten a) bis d), zugegeben wird.

2. Feuchtigkeitshärtender Heissschmelzklebstoff nach Anspruch 1, **dadurch gekennzeichnet, dass** das Isocyanat-funktionelle Polyurethan-Prepolymer als Komponente d) in einer Menge von 10 bis 45 Gew.-%, bevorzugt 10 bis 30 Gew.-%, bevorzugter 10 bis 20 Gew.-%, bezogen auf das Gesamtgewicht der Komponenten a) bis d), zugegeben wird.

3. Feuchtigkeitshärtender Heissschmelzklebstoff nach Anspruch 1 oder Anspruch 2, **dadurch gekennzeichnet, dass** in Schritt A) das stöchiometrische Verhältnis von Isocyanatgruppen zu Hydroxylgruppen im Bereich von 1,3 bis 2,5, bevorzugt von 1,5 bis 2,2, liegt.

4. Feuchtigkeitshärtender Heissschmelzklebstoff nach einem der Ansprüche 1 bis 3, **dadurch gekennzeichnet, dass** das mindestens eine Mercaptosilan in einer Menge von 1 bis 3,3 Gew.-%, bevorzugt 1,3 bis 3 Gew.-%, bevorzugter 1,6 bis 2,8 Gew.-%, bezogen auf das Gesamtgewicht der Komponenten a) bis d), zugegeben wird.

5. Feuchtigkeitshärtender Heissschmelzklebstoff nach einem der Ansprüche 1 bis 4, **dadurch gekennzeichnet, dass** in Schritt A) das mindestens eine Polyol ein Diol ist und/oder als Polyol ein oder mehrere Polyetherpolyole, Polyesterpolyole, Polycarbonatpolyole oder eine Mischung dieser Polyole, besonders bevorzugt ein oder mehrere Polyetherdiole, Polyesterdiole, Polycarbonatdiole oder eine Mischung dieser Polyole, eingesetzt werden, wobei die Komponente a) bevorzugt mindestens ein flüssiges Polyesterdiol, mindestens ein amorphes Polyesterdiol oder mindestens ein amorphes Polycarbonatdiol umfasst.

6. Feuchtigkeitshärtender Heissschmelzklebstoff nach einem der Ansprüche 1 bis 5, **dadurch gekennzeichnet, dass** das Mercaptosilan ein Mercaptosilan der Formel (I) ist, worin X für OR⁴ steht, wobei R⁴ eine lineare oder verzweigte Alkylgruppe mit 1 bis 10 C-Atomen, welche gegebenenfalls 1 oder 2 Ether-Sauerstoffe enthält, bevorzugt eine lineare oder verzweigte Alkylgruppe mit 1 bis 4 C-Atomen, insbesondere Methyl, Ethyl oder Isopropyl, ist, und/oder R³ Methylen oder Propylen ist.

7. Feuchtigkeitshärtender Heissschmelzklebstoff nach einem der Ansprüche 1 bis 6, **dadurch gekennzeichnet, dass** das monomere Polyisocyanat, bevorzugt monomere Diisocyanat, als Komponente b) ein Molekulargewicht von nicht mehr als 500 g/mol, bevorzugt nicht mehr als 400 g/mol aufweist, wobei das monomere Polyisocyanat bevorzugt ausgewählt ist aus 4,4'-, 2,4'- und 2,2'-Diphenylmethandiisocyanat und Gemischen dieser Isomeren (MDI), 2,4- und 2,6-Toluylendiisocyanat und Gemischen dieser Isomeren (TDI), 1,6-Hexamethylendiisocyanat (HDI), 1-Isocyanato-3,3,5-trimethyl-5-isocyanatomethyl-cyclohexan (IPDI) oder Mischungen davon, wobei 4,4'-MDI und IPDI besonders bevorzugt sind.

8. Feuchtigkeitshärtender Heissschmelzklebstoff nach einem der Ansprüche 1 bis 7, **dadurch gekennzeichnet, dass** in Schritt B) das Mercaptosilan mit dem Umsetzungsprodukt bei einer Temperatur von mindestens 60°C umgesetzt wird.

9. Feuchtigkeitshärtender Heissschmelzklebstoff nach einem der Ansprüche 1 bis 8, **dadurch gekennzeichnet, dass** in Schritt C) das Isocyanat-funktionelle Polyurethan-Prepolymer als Komponente d) ein Umsetzungsprodukt von mindestens einem Polyol und mindestens einem monomeren Polyisocyanat ist, wobei nicht umgesetztes monomeres Polyisocyanat durch Destillation oder Extraktion auf einen Restgehalt von unter 1 Gew.-%, bevorzugt nicht mehr als 0,5 Gew.-%, im Umsetzungsprodukt entfernt worden ist.

10. Feuchtigkeitshärtender Heissschmelzklebstoff nach einem der Ansprüche 1 bis 9, **dadurch gekennzeichnet, dass** dem Heissschmelzklebstoff ferner ein oder mehrere thermoplastische Polymere und/oder ein oder mehrere Additive, insbesondere ausgewählt aus Füllstoffen, Katalysatoren, Weichmachern, Haftvermittlern, UV-Absorptionsmitteln, UV- und Wärmestabilisatoren, Antioxidantien, Flammschutzmitteln, optischen Aufhellern, Pigmenten, Farbstoffen und Trocknungsmittel, zugegeben werden.

11. Feuchtigkeitshärtender Heissschmelzklebstoff nach einem der Ansprüche 1 bis 10, **dadurch gekennzeichnet, dass** er einen Gehalt an monomerem Polyisocyanat von nicht mehr als 1,0 Gew.-%, bevorzugt nicht mehr als 0,9 Gew.-% und bevorzugter nicht mehr als 0,8 Gew.-% aufweist.

12. Verfahren zur Herstellung eines feuchtigkeitshärtenden Heissschmelzklebstoffs, umfassend
A) das Umsetzen von einem oder mehreren Polyolen als Komponente a) mit einem oder mehreren monomeren Polyisocyanaten, bevorzugt Diisocyanaten, als Komponente b), wobei das stöchiometrische Verhältnis von Isocyanatgruppen zu Hydroxylgruppen größer 1 ist, um ein Umsetzungsprodukt enthaltend ein Isocyanat-funktionelles Polyurethan-Prepolymer zu erhalten,
B) die Zugabe von mindestens einem Mercaptosilan der Formel (I) als Komponente c)
HS-R³-Si(X)₍₃₋ₐ₎(R²)ₐ (I)
worin R² eine lineare oder verzweigte Alkylgruppe mit 1 bis 10 C-Atomen ist, R³ eine lineare oder verzweigte Alkylengruppe mit 1 bis 10 C-Atomen ist, X ein hydrolysierbarer Rest ist und a für einen Wert von 0, 1 oder 2, bevorzugt 0, steht;
zum Umsetzungsprodukt und Umsetzung, um ein mit dem Mercaptosilan modifiziertes Umsetzungsprodukt zu erhalten, und
C) die Zugabe eines Isocyanat-funktionellen Polyurethan-Prepolymers, das einen Gehalt an monomerem Polyisocyanat von unter 1 Gew.-% aufweist, als Komponente d) vor, während und/oder nach der Zugabe des Mercaptosilans zum Umsetzungsprodukt oder modifizierten Umsetzungsprodukt,
wobei das mindestens eine Mercaptosilan in einer Menge von 0,5 bis 3,5 Gew.-% und das Isocyanat-funktionelle Polyurethan-Prepolymer als Komponente d) in einer Menge von 10 bis 50 Gew.-%, jeweils bezogen auf das Gesamtgewicht der Komponenten a) bis d), zugegeben wird.

13. Verfahren zum Verkleben von einem Substrat **S1** mit einem Substrat **S2** umfassend die Schritte
i) Aufheizen eines feuchtigkeitshärtenden Heissschmelzklebstoffs nach einem der Ansprüche 1 bis 11 auf eine Temperatur zwischen 80°C und 200°C, insbesondere zwischen 120°C und 160°C;
ii) Applikation des aufgeheizten feuchtigkeitshärtenden Heissschmelzklebstoffs auf ein Substrat **S1;**
iii) Kontaktieren der applizierten feuchtigkeitshärtenden Heissschmelzklebstoffs mit einem zweiten Substrat **S2;** und
iv) chemisches Aushärten des feuchtigkeitshärtenden Heissschmelzklebstoffs mit Wasser, insbesondere Luftfeuchtigkeit,
wobei das Substrat **S2** aus demselben oder unterschiedlichem Material wie das Substrat **S1** besteht, wobei mindestens eines der Substrate **S1** oder **S2** bevorzugt eine Kunststofffolie, eine Textilie oder Glas ist.

14. Artikel, welcher nach einem Verfahren nach Anspruch 13 verklebt wurde.

15. Verwendung eines feuchtigkeitshärtenden Heissschmelzklebstoffs nach einem der Ansprüche 1 bis 11 für industrielle Verklebungen, insbesondere im Fahrzeugbau, insbesondere Automobile, in der Textilindustrie, in der Möbelindustrie oder in der Verpackungsmittelindustrie.

## Claims

1. A moisture-curing hotmelt adhesive obtainable by a process comprising
A) reacting one or more polyols as component a) with one or more monomeric polyisocyanates, preferably diisocyanates, as component b), the stoichiometric ratio of isocyanate groups to hydroxyl groups being greater than 1, to give a reaction product comprising an isocyanate-functional polyurethane prepolymer,
B) adding at least one mercaptosilane of the formula (I) as component c)
HS-R³-Si(X)₍₃₋ₐ₎(R²)ₐ (I)
in which R² is a linear or branched alkyl group having 1 to 10 C atoms, R³ is a linear or branched alkylene group having 1 to 10 C atoms, X is a hydrolyzable radical, and a has a value of 0, 1 or 2, preferably 0,
to the reaction product and carrying out reaction to give a reaction product modified with the mercaptosilane, and
C) adding an isocyanate-functional polyurethane prepolymer having a monomeric polyisocyanate content of below 1 wt% as component d) before, during and/or after the adding of the mercaptosilane to the reaction product or modified reaction product,
the at least one mercaptosilane being added in an amount of 0.5 to 3.5 wt% and the isocyanate-functional polyurethane prepolymer as component d) being added in an amount of 10 to 50 wt%, based in each case on the total weight of the components a) to d).

2. The moisture-curing hotmelt adhesive as claimed in claim 1, **characterized in that** the isocyanate-functional polyurethane prepolymer as component d) is added in an amount of 10 to 45 wt%, preferably 10 to 30 wt%, more preferably 10 to 20 wt%, based on the total weight of components a) to d).

3. The moisture-curing hotmelt adhesive as claimed in claim 1 or claim 2, **characterized in that** the stoichiometric ratio of isocyanate groups to hydroxyl groups in step A) is in the range from 1.3 to 2.5, preferably from 1.5 to 2.2.

4. The moisture-curing hotmelt adhesive as claimed in any of claims 1 to 3, **characterized in that** the at least one mercaptosilane is added in an amount of 1 to 3.3 wt%, preferably 1.3 to 3wt%, more preferably 1.6 to 2.8 wt%, based on the total weight of components a) to d).

5. The moisture-curing hotmelt adhesive as claimed in any of claims 1 to 4, **characterized in that** in step A) the at least one polyol is a diol and/or the polyol used comprises one or more polyether polyols, polyester polyols, polycarbonate polyols or a mixture of these polyols, more preferably one or more polyether diols, polyester diols, polycarbonate diols or a mixture of these polyols, and component a) preferably comprises at least one liquid polyester diol, at least one amorphous polyester diol or at least one amorphous polycarbonate diol.

6. The moisture-curing hotmelt adhesive as claimed in any of claims 1 to 5, **characterized in that** the mercaptosilane is a mercaptosilane of the formula (I) in which X is OR⁴, R⁴ being a linear or branched alkyl group having 1 to 10 C atoms which optionally contains 1 or 2 ether oxygens, preferably a linear or branched alkyl group having 1 to 4 C atoms, more particularly methyl, ethyl or isopropyl, and/or R³ being methylene or propylene.

7. The moisture-curing hotmelt adhesive as claimed in any of claims 1 to 6, **characterized in that** the monomeric polyisocyanate, preferably monomeric diisocyanate, as component b) has a molecular weight of not more than 500 g/mol, preferably not more than 400 g/mol, the monomeric polyisocyanate being preferably selected from 4,4'-, 2,4'-, and 2,2'-diphenylmethane diisocyanate and mixtures of these isomers (MDI), 2,4- and 2,6-tolylene diisocyanate and mixtures of these isomers (TDI), 1,6-hexamethylene diisocyanate (HDI), 1-isocyanato-3,3,5-trimethyl-5-isocyanatomethylcyclohexane (IPDI) or mixtures thereof, with 4,4'-MDI and IPDI being particularly preferred.

8. The moisture-curing hotmelt adhesive as claimed in any of claims 1 to 7, **characterized in that** in step B) the mercaptosilane is reacted with the reaction product at a temperature of at least 60°C.

9. The moisture-curing hotmelt adhesive as claimed in any of claims 1 to 8, **characterized in that** in step C) the isocyanate-functional polyurethane prepolymer as component d) is a reaction product of at least one polyol and at least one monomeric polyisocyanate, with unconverted monomeric polyisocyanate having been removed by distillation or extraction to a residual content of below 1 wt%, preferably not more than 0.5 wt%, in the reaction product.

10. The moisture-curing hotmelt adhesive as claimed in any of claims 1 to 9, **characterized in that** the hotmelt adhesive is admixed further with one or more thermoplastic polymers and/or one or more additives, more particularly selected from fillers, catalysts, plasticizers, adhesion promoters, UV absorbers, UV and heat stabilizers, antioxidants, flame retardants, optical brighteners, pigments, dyes, and dryers.

11. The moisture-curing hotmelt adhesive as claimed in any of claims 1 to 10, **characterized in that** it has a monomeric polyisocyanate content of not more than 1.0 wt%, preferably not more than 0.9 wt%, and more preferably not more than 0.8 wt%.

12. A process for preparing a moisture-curing hotmelt adhesive, comprising
A) reacting one or more polyols as component a) with one or more monomeric polyisocyanates, preferably diisocyanates, as component b), the stoichiometric ratio of isocyanate groups to hydroxyl groups being greater than 1, to give a reaction product comprising an isocyanate-functional polyurethane prepolymer,
B) adding at least one mercaptosilane of the formula (I) as component c)
HS-R³-Si(X)₍₃₋ₐ₎(R²)ₐ (I)
in which R² is a linear or branched alkyl group having 1 to 10 C atoms, R³ is a linear or branched alkylene group having 1 to 10 C atoms, X is a hydrolyzable radical, and a has a value of 0, 1 or 2, preferably 0,
to the reaction product and carrying out reaction to give a reaction product modified with the mercaptosilane, and
C) adding an isocyanate-functional polyurethane prepolymer having a monomeric polyisocyanate content of below 1 wt% as component d) before, during and/or after the adding of the mercaptosilane to the reaction product or modified reaction product,
the at least one mercaptosilane being added in an amount of 0.5 to 3.5 wt% and the isocyanate-functional polyurethane prepolymer as component d) being added in an amount of 10 to 50 wt%, based in each case on the total weight of the components a) to d).

13. A method for adhesively bonding a substrate **S1** to a substrate **S2,** comprising the steps of
i) heating a moisture-curing hotmelt adhesive as claimed in any of claims 1 to 11 to a temperature of between 80°C and 200°C, more particularly between 120°C and 160°C;
ii) applying the heated moisture-curing hotmelt adhesive to a substrate **S1;**
iii) contacting the applied moisture-curing hotmelt adhesive with a second substrate **S2;** and
iv) chemically curing the moisture-curing hotmelt adhesive with water, more particularly atmospheric moisture,
the substrate **S2** consisting of the same material as or different material from the substrate **S1,** and at least one of the substrates, **S1** or **S2,** preferably being a polymeric film, a textile or glass.

14. An article bonded by a method as claimed in claim 13.

15. The use of a moisture-curing hotmelt adhesive as claimed in any of claims 1 to 11 for industrial adhesive bonds, more particularly in vehicle construction, especially automobiles, in the textile industry, in the furniture industry or in the packaging material industry.

## Revendications

1. Adhésif thermofusible durcissant à l'humidité, pouvant être obtenu par un procédé comprenant :
A) la mise en réaction d'un ou de plusieurs polyols en tant que composant a) avec un ou plusieurs polyisocyanates monomères, de préférence diisocyanates, en tant que composant b), le rapport stoechiométrique entre les groupes isocyanate et les groupes hydroxyle étant supérieur à 1, afin d'obtenir un produit de réaction contenant un prépolymère de polyuréthane à fonction isocyanate,
B) l'ajout d'au moins un mercaptosilane de formule (I) en tant que composant c)
HS-R³-Si(X)₍₃₋ₐ₎(R²)ₐ (I)
dans laquelle R² représente un groupe alkyle linéaire ou ramifié de 1 à 10 atomes C, R³ représente un groupe alkylène linéaire ou ramifié de 1 à 10 atomes C, X représente un radical hydrolysable et a représente une valeur de 0, 1 ou 2, de préférence 0 ;
au produit de réaction et la mise en réaction afin d'obtenir un produit de réaction modifié avec le mercaptosilane, et
C) l'ajout d'un prépolymère de polyuréthane à fonction isocyanate, qui présente une teneur en polyisocyanate monomère inférieure à 1 % en poids, en tant que composant d), avant, pendant et/ou après l'ajout du mercaptosilane, au produit de réaction ou au produit de réaction modifié, ledit au moins un mercaptosilane étant ajouté en une quantité de 0,5 à 3,5 % en poids et le prépolymère de polyuréthane à fonction isocyanate en tant que composant d) étant ajouté en une quantité de 10 à 50 % en poids, à chaque fois par rapport au poids total des composants a) à d) .

2. Adhésif thermofusible durcissant à l'humidité selon la revendication 1, **caractérisé en ce que** le prépolymère de polyuréthane à fonction isocyanate en tant que composant d) est ajouté en une quantité de 10 à 45 % en poids, de préférence de 10 à 30 % en poids, de manière davantage préférée de 10 à 20 % en poids, par rapport au poids total des composants a) à d).

3. Adhésif thermofusible durcissant à l'humidité selon la revendication 1 ou la revendication 2, **caractérisé en ce qu'**à l'étape A), le rapport stoechiométrique entre les groupes isocyanate et les groupes hydroxyle se situe dans la plage allant de 1,3 à 2,5, de préférence de 1,5 à 2,2.

4. Adhésif thermofusible durcissant à l'humidité selon l'une quelconque des revendications 1 à 3, **caractérisé en ce que** ledit au moins un mercaptosilane est ajouté en une quantité de 1 à 3,3 % en poids, de préférence de 1,3 à 3 % en poids, de manière davantage préférée de 1,6 à 2,8 % en poids, par rapport au poids total des composants a) à d) .

5. Adhésif thermofusible durcissant à l'humidité selon l'une quelconque des revendications 1 à 4, **caractérisé en ce qu'**à l'étape A), ledit au moins un polyol est un diol et/ou en tant que polyol, un ou plusieurs polyéther-polyols, polyester-polyols, polycarbonate-polyols ou un mélange de ces polyols, de manière particulièrement préférée un ou plusieurs polyéther-diols, polyester-diols, polycarbonate-diols ou un mélange de ces polyols, sont utilisés, le composant a) comprenant de préférence au moins un polyester-diol liquide, au moins un polyester-diol amorphe ou au moins un polycarbonate-diol amorphe.

6. Adhésif thermofusible durcissant à l'humidité selon l'une quelconque des revendications 1 à 5, **caractérisé en ce que** le mercaptosilane est un mercaptosilane de formule (I), dans laquelle X représente OR⁴, R⁴ étant un groupe alkyle linéaire ou ramifié de 1 à 10 atomes C, qui contient éventuellement 1 ou 2 oxygènes éthérés, de préférence un groupe alkyle linéaire ou ramifié de 1 à 4 atomes C, notamment méthyle, éthyle ou isopropyle, et/ou R³ est méthylène ou propylène.

7. Adhésif thermofusible durcissant à l'humidité selon l'une quelconque des revendications 1 à 6, **caractérisé en ce que** le polyisocyanate monomère, de préférence le diisocyanate monomère, en tant que composant b) présente un poids moléculaire non supérieur à 500 g/mol, de préférence non supérieur à 400 g/mol, le polyisocyanate monomère étant de préférence choisi parmi le diisocyanate de 4,4'-, 2,4'- et 2,2'-diphénylméthane et les mélanges de ces isomères (MDI), le diisocyanate de 2, 4- et 2, 6-toluylène et les mélanges de ces isomères (TDI), le diisocyanate de 1,6-hexaméthylène (HDI), le 1-isocyanato-3,3,5-triméthyl-5-isocyanatométhyl-cyclohexane (IPDI) ou leurs mélanges, le 4,4'-MDI et l'IPDI étant particulièrement préférés.

8. Adhésif thermofusible durcissant à l'humidité selon l'une quelconque des revendications 1 à 7, **caractérisé en ce qu'**à l'étape B), le mercaptosilane est mis en réaction avec le produit de réaction à une température d'au moins 60 °C.

9. Adhésif thermofusible durcissant à l'humidité selon l'une quelconque des revendications 1 à 8, **caractérisé en ce qu'**à l'étape C), le prépolymère de polyuréthane à fonction isocyanate en tant que composant d) est un produit de réaction d'au moins un polyol et d'au moins un polyisocyanate monomère, le polyisocyanate monomère non réagi ayant été éliminé par distillation ou extraction à une teneur résiduelle inférieure à 1 % en poids, de préférence non supérieure à 0,5 % en poids, dans le produit de réaction.

10. Adhésif thermofusible durcissant à l'humidité selon l'une quelconque des revendications 1 à 9, **caractérisé en ce qu'**un ou plusieurs polymères thermoplastiques et/ou un ou plusieurs additifs, notamment choisis parmi les charges, les catalyseurs, les plastifiants, les promoteurs d'adhésion, les agents d'absorption UV, les stabilisateurs UV et thermiques, les antioxydants, les agents ignifuges, les azurants optiques, les pigments, les colorants et les agents siccatifs, sont en outre ajoutés à l'adhésif thermofusible.

11. Adhésif thermofusible durcissant à l'humidité selon l'une quelconque des revendications 1 à 10, **caractérisé en ce qu'**il présente une teneur en polyisocyanate monomère non supérieure à 1,0 % en poids, de préférence non supérieure à 0,9 % en poids et de manière davantage préférée non supérieure à 0,8 % en poids.

12. Procédé de fabrication d'un adhésif thermofusible durcissant à l'humidité, comprenant :
A) la mise en réaction d'un ou de plusieurs polyols en tant que composant a) avec un ou plusieurs polyisocyanates monomères, de préférence diisocyanates, en tant que composant b), le rapport stoechiométrique entre les groupes isocyanate et les groupes hydroxyle étant supérieur à 1, afin d'obtenir un produit de réaction contenant un prépolymère de polyuréthane à fonction isocyanate,
B) l'ajout d'au moins un mercaptosilane de formule (I) en tant que composant c)
HS-R³-Si(X)₍₃₋ₐ₎(R²)ₐ (I)
dans laquelle R² représente un groupe alkyle linéaire ou ramifié de 1 à 10 atomes C, R³ représente un groupe alkylène linéaire ou ramifié de 1 à 10 atomes C, X représente un radical hydrolysable et a représente une valeur de 0, 1 ou 2, de préférence 0 ;
au produit de réaction et la mise en réaction afin d'obtenir un produit de réaction modifié avec le mercaptosilane, et
C) l'ajout d'un prépolymère de polyuréthane à fonction isocyanate, qui présente une teneur en polyisocyanate monomère inférieure à 1 % en poids, en tant que composant d), avant, pendant et/ou après l'ajout du mercaptosilane au produit de réaction ou au produit de réaction modifié, ledit au moins un mercaptosilane étant ajouté en une quantité de 0,5 à 3,5 % en poids et le prépolymère de polyuréthane à fonction isocyanate en tant que composant d) étant ajouté en une quantité de 10 à 50 % en poids, à chaque fois par rapport au poids total des composants a) à d) .

13. Procédé de collage d'un substrat S1 avec un substrat S2, comprenant les étapes suivantes :
i) le chauffage d'un adhésif thermofusible durcissant à l'humidité selon l'une quelconque des revendications 1 à 11 à une température comprise entre 80 °C et 200 °C, notamment comprise entre 120 °C et 160 °C ;
ii) l'application de l'adhésif thermofusible durcissant à l'humidité chauffé sur un substrat S1 ;
iii) la mise en contact de l'adhésif thermofusible durcissant à l'humidité appliqué avec un deuxième substrat S2 ; et
iv) le durcissement chimique de l'adhésif thermofusible durcissant à l'humidité avec de l'eau, notamment l'humidité de l'air,
le substrat S2 étant constitué par un matériau identique ou différent du substrat S1, au moins un des substrats S1 ou S2 étant de préférence un film plastique, un textile ou du verre.

14. Article, qui a été collé par un procédé selon la revendication 13.

15. Utilisation d'un adhésif thermofusible durcissant à l'humidité selon l'une quelconque des revendications 1 à 11 pour des collages industriels, notamment dans la construction de véhicules, notamment d'automobiles, dans l'industrie textile, dans l'industrie des meubles ou dans l'industrie des emballages.
